(19) Europäisches Patentamt
European Patent Office
Office européen des brevets

(11) **EP 3 718 204 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **18811217.1**

(22) Anmeldetag: **27.11.2018**

(51) Internationale Patentklassifikation (IPC):
**H02P 23/00** *(2016.01)*

(52) Gemeinsame Patentklassifikation (CPC):
**H02P 23/0077; H02P 23/0004**

(86) Internationale Anmeldenummer:
**PCT/EP2018/082674**

(87) Internationale Veröffentlichungsnummer:
**WO 2019/102032 (31.05.2019 Gazette 2019/22)**

(54) **VERFAHREN ZUM EINSTELLEN VON WERTEN EINER MEHRZAHL VON PARAMETERN MINDESTENS EINES REGLERS EINES ELEKTRISCHEN ANTRIEBSSYSTEMS UND ELEKTRISCHES ANTRIEBSSYSTEM**

METHOD FOR ADJUSTING VALUES OF A PLURALITY OF PARAMETERS OF AT LEAST ONE CONTROLLER OF AN ELECTRIC DRIVE SYSTEM, AND ELECTRIC DRIVE SYSTEM

PROCÉDÉ DE RÉGLAGE DE VALEURS D'UNE PLURALITÉ DE PARAMÈTRES D'AU MOINS UN RÉGULATEUR D'UN SYSTÈME D'ENTRAÎNEMENT ÉLECTRIQUE ET SYSTÈME D'ENTRAÎNEMENT ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2017 DE 102017221222**

(43) Veröffentlichungstag der Anmeldung:
**07.10.2020 Patentblatt 2020/41**

(73) Patentinhaber: **Lenze Automation GmbH 31855 Aerzen (DE)**

(72) Erfinder:
• **PETERSEN, Thomas 38104 Braunschweig (DE)**
• **PERNER, Lars 38159 Vechelde (DE)**
• **KÜHN, Johannes 38106 Braunschweig (DE)**

(74) Vertreter: **Patentanwälte Ruff, Wilhelm, Beier, Dauster & Partner mbB Kronenstraße 30 70174 Stuttgart (DE)**

(56) Entgegenhaltungen:
WO-A1-2007/122904     DE-A1-102010 056 295
US-A- 5 475 291          US-A1- 2003 040 817

• **Anonymous: "Tuning / Parameter Setting Auto Tuning Why Auto Tuning?", , 1. Juli 2016 (2016-07-01), Seiten 1-16, XP055552035, Gefunden im Internet: URL:https://www.schneider-electric.com/res ources/sites/SCHNEIDER_ELECTRIC/content/li ve/FAQS/292000/FA292680/en_US/LXM32_Auto Tu ning.pdf [gefunden am 2019-02-05]**
• **Richard W Armstrong ET AL: "Load to Motor Inertia Mismatch: Unveiling The Truth", , 1. Januar 1998 (1998-01-01), XP055552045, Gefunden im Internet: URL:https://pdfs.semanticscholar.org/f1d3/ f1eee2a1a3380eb5cdbc3a605a21c6058bfd.pdf [gefunden am 2019-02-05]**

**Beschreibung**

Die Erfindung betrifft ein Verfahren zum Einstellen von Werten einer Mehrzahl von Parametern mindestens eines Reglers eines elektrischen Antriebssystems und ein elektrisches Antriebssystem.

Die WO 2007/122904 A1 offenbart eine Motorregeleinrichtung und ein Reglerparametereinstellverfahren.

Die US 2003/040817 A1 offenbart ein Verfahren zum Autotuning von Reglerparametern eines Motorregelsystems.

Die US 5 475 291 A offenbart ein Verfahren zum Einstellen einer Mehrzahl von Steuerparametern zum Regeln eines Servomotors.

Die Veröffentlichung Anonymus: "Tuning / Parameter Setting Auto Tuning Why Auto Tuning?", 1. Juli 2016 (2016-07-01), Seiten 1-16, XP055552035 offenbart ein Verfahren zum Autotuning von Reglerparametern eines Servosystems.

Die Veröffentlichung Richard W Armstrong ET AL: "Load to Motor Inertia Mismatch: Unveiling The Truth", 1. Januar 1998 (1998-01-01), XP055552045, befasst sich mit der Berücksichtigung von Trägheitsaspekten bei Servoreglern.

Die DE 10 2010 056 295 A1 offenbart ein Verfahren zur Regelung der Bahnspannung in einem einen Tänzer aufweisenden Bahnspannungsabschnitt, bei dem ein Benutzer lediglich einen Parameter einzustellen hat, welcher beispielsweise proportional in einen automatisch bestimmten Reglerparameter eingeht.

Der Erfindung liegt die Aufgabe zugrunde, ein Verfahren zum Einstellen von Werten einer Mehrzahl von Parametern mindestens eines Reglers eines elektrischen Antriebssystems und ein elektrisches Antriebssystem zur Verfügung zu stellen, die ein möglichst einfaches und hinsichtlich einer erzielbaren Regelgüte möglichst optimales Einstellen der Werte der Parameter ermöglichen.

Die Erfindung löst diese Aufgabe durch ein Verfahren nach Anspruch 1 und ein Antriebssystem nach Anspruch 8.

Das erfindungsgemäße Verfahren dient zum Einstellen von Werten von Parametern eines oder mehrerer Regler, wobei der oder die Regler Bestandteil eines elektrischen Antriebssystems ist/sind.

Erfindungsgemäß wird ein einzelner Ersatzparameterwert erzeugt und für einen Benutzer einstellbar dargestellt.

Nach einem Einstellen des Ersatzparameterwerts durch den Benutzer werden die Werte der Mehrzahl von Parametern basierend auf dem eingestellten Ersatzparameterwert berechnet und beispielsweise gespeichert. Ein Ende des Einstellens kann durch den Benutzer explizit bestätigt werden, so dass erst nach dem Bestätigen eine Übernahme und ein Speichern der Werte der Parameter erfolgt. Beispielsweise kann ein Benutzer zum Einstellen des Ersatzparameterwerts einen Schieberegler horizontal oder vertikal zwischen zwei Grenzposition bewegen, wobei eine der Grenzpositionen ein "weiches" Regelverhalten bezeichnet und die andere der Grenzpositionen ein "hartes" Regelverhalten bezeichnet.

Das elektrische Antriebssystem weist einen Lageregler und einen Drehzahlregler auf, wobei die Mehrzahl von Parametern Parameter des Lagereglers und Parameter des Drehzahlreglers sind.

Gemäß einer Ausführungsform weist der Lageregler einen einzustellenden Proportional (P)-Parameter auf und der Drehzahlregler weist einen einzustellenden P-Parameter, einen einzustellenden (Integral) I-Parameter und/oder eine einzustellende Filterzeit auf.

Bei der Einstellung von Reglerparametern existieren mehrere Abhängigkeiten. Herkömmlich wird zuerst der Lageregler (P-Regler) weich eingestellt. Danach werden die Werte der Parameter des Drehzahlreglers (erst P dann I) steif eingestellt. Schließlich wird dann der Lageregler steif eingestellt. Danach muss der Drehzahlregler nochmal überprüft werden. Der Vorgang dauert auch bei geübten Technikern lange. Da auch noch die Filterzeit des Drehzahlwertes eine Rolle spielt, gibt es eine Abhängigkeit von mindestens vier Parametern.

Es ist jedoch schwierig vier oder mehr Werte der Parameter gleichzeitig manuell einzustellen, da die Kombinatorik sehr umfangreich ist. Aus diesem Grund wird typischerweise eine sequentielle Vorgehensweise gewählt, welche jedoch nicht zu einer optimalen Reglerparametrierung führt.

Erfindungsgemäß werden nun nicht die Reglerparameter selbst, sondern, unter Verwendung von mathematischen Gleichungen, ein Ersatzparameterwert eingestellt. Beispielsweise kann als Ersatzparameterwert ein Lastabstimmungsfaktor $k_j$ verwendet werden. Es kann aber auch ein beliebiger Weich-Steif-Wert als Ersatzparameterwert bereitgestellt werden. Der Ersatzparameterwert kann beispielsweise mittels eines physischen oder Software-simulierten Potentiometers eingestellt werden. Durch das Verändern/Drehen des Potenziometers bzw. das Verändern des Ersatzparameterwerts werden alle relevanten Werte der Parameter neu berechnet. Das iterative Einstellen der einzelnen Werte der Parameter entfällt.

Beispielsweise kann ein Einstellvorgang mit einem Ersatzparameterwert bzw. Lastabstimmungsfaktor $k_j$ von 1.0 begonnen werden. Der Ersatzparameterwert wird dann so lange erhöht, bis die Regelgüte ausreicht oder es beispielsweise zu Geräuschen kommt. Dadurch, dass nur ein einzelner Ersatzparameterwert einzustellen ist, reduziert sich eine notwendige Einstelldauer erheblich.

Der oder die Regler können auf einem Zustandsregler basieren, wobei dessen Parameterwerte wie oben beschrieben unter Zwischenschaltung des Ersatzparameterwerts eingestellt werden.

Das elektrische Antriebssystem kann auch einen Zustandsregler für mechanische Regelgrößen aufweisen, wobei die Mehrzahl von Parametern Parameter des Zustandsreglers sind.

Gemäß einer Ausführungsform wird basierend auf simulierten und/oder gemessenen Betriebsgrößen des elektrischen Antriebssystems bestimmt, ob mindestens ein Regelkreis, dem der mindestens eine Regler zugeordnet ist, seine Stabilitätsgrenze erreicht oder überschreitet, d.h. grenzstabil oder instabil ist/wird. Dies kann beispielsweise der Fall sein, wenn ein Antrieb grenzstabil schwingt. Die Nähe zur Stabilitätsgrenze kann beispielsweise durch Analyse des Drehzahl- und/oder des Momentenverlaufs ermittelt werden. Bei dem Regelkreis kann es sich beispielsweise um einen Lageregelkreis, Drehzahlregelkreis, Stromregelkreis, etc. handeln. Die Stabilitäts-Erkennung, Grenzstabilitäts-Erkennung und/oder Instabilitäts-Erkennung kann basierend auf an sich bekannten Stabilitätskriterien erfolgen.

Gemäß einer Ausführungsform weisen die Betriebsgrößen einen zeitlichen Verlauf eines Stroms eines Elektromotors des elektrischen Antriebssystems, und/oder einen zeitlichen Verlauf einer Drehzahl des Elektromotors und/oder einen zeitlichen Verlauf einer Lage einer mittels des elektrischen Antriebssystems zu bewegenden Komponente auf.

Gemäß einer Ausführungsform wird ein beispielsweise elektrisches/optisches/haptisches/akustisches Signal erzeugt, das einen nicht stabilen Zustand des mindestens einen Regelkreises signalisiert. Das Signal kann beispielsweise für einen Bediener des elektrischen Antriebssystems wahrnehmbar sein und/oder auch automatisiert weiterverarbeitbar sein.

Eine Veränderung der Reglerparametrierung und/oder eine Veränderung der Last kann zu einer Instabilität der Regelkreise führen. Eine solche Instabilität zu erkennen ist nicht immer einfach. Typischerweise wird ein einzelner Wert eines Parameters bzw. Reglerparameter von mehreren erhöht, bis Geräusche oder sichtbare Schwingungen auftreten. Da Geräusche und Schwingungen jedoch stark subjektiv empfunden werden, werden die Werte der Parameter nach subjektiven Einschätzungen der Inbetriebnehmer und damit unterschiedlich eingestellt.

Erfindungsgemäß wird automatisiert ein Signal erzeugt, das einen nicht stabilen Zustand des mindestens einen Regelkreises signalisiert. Das Signal kann beispielsweise in einer Inbetriebnahme-Software als Boolesches Signal bzw. farbige bzw. mehrfarbige LED dargestellt werden oder in einer Oszilloskop-Darstellung als Pegel dargestellt werden. Das Signal signalisiert das Erreichen der Instabilität bzw. die Annäherung an die Stabilitätsgrenze bzw. das Überschreiten der Stabilitätsgrenze.

Bei einer LED-Darstellung wird die LED beispielsweise umso häufiger aktiviert, desto dichter sich der Regelkreis an seiner Stabilitätsgrenze befindet. Es kann auch ein Farbwechsel bewirkt werden, beispielsweise von grün nach gelb nach rot. Eine Einstellregel für die Werte der Parameter kann daher beispielsweise wie folgt formuliert werden: Verändere die Werte der Parameter so lange in Richtung Instabilität, bis die LED deutlich flackert. Dann gehe um 30% zurück. Dieser Vorgang ist auch automatisierbar.

Das Signal kann alternativ kontinuierlich Werte zwischen einer oberen Grenze, die eine Instabilität abbildet, und einer unteren Grenze annehmen, die den stabilen Zustand abbildet. Je weiter sich das Signal der oberen Grenze annähert, desto dichter befindet sich der Regelkreis an seiner Stabilitätsgrenze. Die Einstellregel für die Werte der Parameter können für diesen Fall beispielsweise wie folgt formuliert werden: Verändere die Werte der Parameter so lange in Richtung Instabilität, bis das Signal einen Wert von beispielsweise "70% stabil" anzeigt.

Zur Berechnung des Signals bzw. zur Berechnung des Zustands bzw. Werts des Signals können beispielsweise verschiedene Größen berücksichtigt werden, wie beispielsweise Zeitverlauf eines Stroms, Zeitverlauf einer Drehzahl, und/oder Zeitverlauf einer Lage.

Verschiedene mathematische Filter und Frequenzanalyseverfahren (z.B. Wavelet-Analyse, FFT, DFT, ...) können zur Berechnung des Signals bzw. zur Berechnung des Zustands bzw.

Wert des Signals verwendet werden. Zusätzlich oder alternativ können beispielsweise Messwerte von externen Beschleunigungssensoren oder Mikrofonen verwendet werden.

Das erfindungsgemäße, stabilitätsanzeigende Signal ermöglicht verglichen mit herkömmlichen Parameterwert-Einstellverfahren, die auf einer subjektiven Wahrnehmung der Instabilität beruhen, eine schnellere und einfachere, insbesondere manuelle, Inbetriebnahme. Das erfindungsgemäße, stabilitätsanzeigende Signal bietet beispielsweise eine visuelle Unterstützung bei der Inbetriebnahme in lauter Umgebung, da dann Geräusche, die durch unzureichend eingestellte Reglerparameter entstehen, überhört werden können. Darüber hinaus ist auch eine automatische Inbetriebnahme möglich. Weiter können basierend auf dem stabilitätsanzeigenden Signal Service-Funktionen und/oder vorbeugende und/oder prospektive Instandhaltungs-Funktionen implementiert werden, da eine sich schleichend einstellende Instabilität erkannt werden kann. Das erfindungsgemäße, stabilitätsanzeigende Signal ermöglicht weiter eine reproduzierbarere Parameterwerteinstellung.

Gemäß einer Ausführungsform werden die Werte der Mehrzahl von Parametern automatisch bzw. ohne Benutzerinteraktion in einer bestimmten Reihenfolge, in einer zufälligen Reihenfolge, oder gleichzeitig so lange verändert, bis der mindestens eine Regelkreis nicht mehr stabil ist bzw. bis der mindestens ein Regelkreis seine Stabilitätsgrenze erreicht oder überschreitet, wobei die sich bei nicht mehr stabilem Regelkreis einstellenden Werte der Mehrzahl von Parametern als Referenzwerte gespeichert werden. Anschließend werden die Werte der Mehrzahl von Parametern basierend auf den Referenzwerten eingestellt. Beispielsweise können die Werte der Mehrzahl von Parametern durch Multiplizieren der Referenzwerte mit einem Faktor von kleiner als 1 berechnet werden. Die derart berechneten Werte der Parameter können anschließend mit Werten verglichen werden, die in Abhängigkeit von Massenträgheiten und Laufzeiten des Antriebssystems ermittelt werden.

In Servoumrichtern müssen die Drehzahl- und die Lageregelung an die Regelstrecke angepasst werden. Anderes als bei einem Stromregler, bei dem die Werte der Parameter der Regler aus dem zugehörigen Motorkatalog abgeleitet werden können, müssen die Drehzahl- und Lageregler von Hand an die vorliegende mechanische Regelstrecke angepasst werden. Das dauert lange und erfordert Erfahrung. Um dies zu erleichtern, ist es auch möglich, die Werte der Parameter zu berechnen. Dafür werden ein mathematisches Modell der Regelstrecke und die konkret vorliegenden Regelstreckenparameter (Massen, Elastizitäten, Dämpfung, Lose, ...) benötigt. Ausgehend von diesem Modell können die Reglerparameter näherungsweise berechnet werden.

Die Berechnung der Werte der Parameter aus dem Modell funktioniert grundsätzlich gut, aber die Übereinstimmung des Modells zur Realität ist prinzipbedingt begrenzt. Ist das Modell zu ungenau oder fehlen Details, wie z.B. die Eigenfrequenz der Regelstrecke, dann ist die erreichte Regelgüte nicht optimal oder der Regler ist gegebenenfalls sogar instabil.

Daher wird üblicherweise zusätzlich manuell optimiert. Dafür wird in der Regel in Anlehnung an Ziegler-Nichols die Stabilitätsgrenze ermittelt. Zuerst werden der Drehzahlregler und dann der Lageregler eingestellt. Dafür wird die Stabilitätsgrenze durch schrittweises Erhöhen der Verstärkungsfaktoren ermittelt. Es wird dann 45% bzw. 50% der höchsten stabilen Verstärkung verwendet. Diese manuelle Einstellung dauert lange, ist schlecht reproduzierbar und fußt maßgeblich auf der subjektiven Einschätzung des Inbetriebnehmers. Sie ist aber nicht auf das Wissen von Streckeneigenschaften wie Eigenfrequenz angewiesen und wird sehr oft angewendet, insbesondere dann, wenn die Strecke Elastizitäten beinhaltet.

Zur Lösung dieses Problems werden erfindungsgemäß die Werte der Parameter für eine grenzstabile Reglereinstellung automatisch ermittelt, wobei daraus die optimalen Werte der Parameter des Reglers bestimmt werden.

Die Werte der Parameter werden wie bei der manuellen Einstellung schrittweise erhöht. Allerdings erfolgt die schrittweise Erhöhung automatisch, d.h. die Werte der Parameter werden automatisiert eingestellt. Das spart Zeit und führt zu einer guten Reproduzierbarkeit.

Anders als bei Ziegler-Nichols kann zusätzlich noch ein Optimierungskriterium (beispielsweise kleinstes Fehlerquadrat des Schleppfehlers der Achse während der Testbewegung) berücksichtigt werden.

Erfindungsgemäß wird zur automatisierten Einstellung der Werte der Parameter, insbesondere eines Drehzahlreglers und gegebenenfalls eines Lagereglers, automatisch iterativ wie folgt verfahren. Werte eines oder mehrerer Parameter eines oder mehrerer Regler werden automatisch verändert und die sich ergebende Regelgüte wird automatisch bewertet. Ein Signal bzw. ein Stabilitäts-Indikator wird automatisch bestimmt, wobei das Signal bzw. der Stabilitäts-Indikator die Stabilitätsgrenze objektiviert. Ein Gütekriterium wird zur Bewertung der aktuellen Einstellung der Werte der Parameter verwendet. Dies kann beispielsweise in Anlehnung an Ziegler-Nichols berechnet werden. Ein Startwert für den oder die Werte des oder der Parameter kann die Reglereinstellung mit Motor ohne Last sein. Das erfindungsgemäße Verfahren kann mit einer herkömmlichen Streckenidentifikation kombiniert werden, um deren Resultate vorteilhaft mit einzubeziehen.

Erfindungsgemäß werden die Werte der Parameter der Regler automatisch iterativ heuristisch und nicht wie herkömmlich durch Modellbetrachtung eingestellt. Dadurch sind Parameterunsicherheiten oder Modellfehler für die Reglerparametrierung irrelevant. Es werden ein Optimierungskriterium und der Stabilitätsindikator bei der Regelung betrachtet. Das Verfahren kann eine rein heuristische automatisierte Einstellung der Werte der Parameter der Regler ohne Bezug auf ein physikalisches Modell der Strecke sein.

Dies führt zu einer schnelleren Inbetriebnahme, einer besseren Abstimmung der Regler durch feinere Schritte und einer hohen Reproduzierbarkeit der Reglereinstellung, wobei ein Optimierungskriterium zusätzlich zur ermittelten Stabilitätsgrenze berücksichtigt wird.

Die Regelgüte kann basierend auf einer Summe der Fehlerquadrate berechnet werden. Dabei können die gleichen Trajektorien einer angetriebenen Komponente gemessen werden, wobei die höchste Regelgüte diejenigen Werte der Parameter aufweisen, deren Summe minimal ist. Im Gegensatz zu einem Durchschnittswert werden hierbei größere Fehler überproportional betont, da diese quadriert werden.

Erfindungsgemäß werden die Werte durch eine Anzahl von verwendeten Messpunkten geteilt, wobei schließlich die Wurzel über das Zwischenergebnis gezogen wird. Beispielsweise können 1000 Messpunkte über eine Vielzahl von Bewegungen verwendet werden. Ist die Bewegung kürzer, kann lediglich eine einzelne Bewegung verwendet werden.

Nachfolgend werden einige Beispiele für Berechnungsvorschriften des Gütekriteriums dargestellt.

In seiner einfachsten Form wird das Gütekriterium, hier als G1 bezeichnet, wie folgt berechnet:

$$G1 = \sqrt{\frac{1}{N} \sum_{n=1}^{N} (e(n))^2}$$

wobei N eine Anzahl von Messwerten bezeichnet, n eine Abtastung bezeichnet und e(n) einen Regelfehler bei der Abtastung n bezeichnet.

Für N = 1000 ergibt sich exemplarisch:

$$G1 = \sqrt{\frac{1}{1000} \sum_{n=1}^{1000} (e(n))^2}$$

Ein momentennormiertes Gütekriterium, hier als G2 bezeichnet, kann wie folgt berechnet werden:

$$G2 = \frac{1000 \cdot Mnenn}{\sum_{n=1}^{1000} M(n)} \sqrt{\frac{1}{1000} \sum_{n=1}^{1000} (e(n))^2}$$

wobei M(n) ein Moment bei der Abtastung n und Mnenn ein Nennmoment bezeichnet.

Ein weiteres momentennormiertes Gütekriterium, hier als G3 bezeichnet, kann wie folgt berechnet werden:

$$G3 = \sqrt{\frac{1}{1000} \sum_{n=1}^{1000} \frac{Mnen}{M(n)} (e(n))^2}$$

Das Gütekriterium kann beispielsweise mittels eines Frequenzumrichters oder Servoumrichters während dessen Laufzeit ermittelt werden und kann daher jederzeit, wie beispielsweise eine Motortemperatur, im Umrichter im Trend betrachtet werden. Das Gütekriterium gibt online eine Auskunft über die Güte der Regelung und die Güte der Vorsteuerung und kann für Abnahmeprotokolle und Tests ausgegeben werden.

Zum Einstellen der Werte der Mehrzahl von Parametern wird eine Bedienoberfläche erzeugt. Mit anderen Worten erfolgt das Einstellen der Werte der Mehrzahl von Parametern mittels der Bedienoberfläche.

Die Bedienoberfläche weist einen ersten Einstell-Modus auf, während dem lediglich ein einzelner Wert in Form des Ersatzparameterwerts einstellbar ist. Weitere Einstellmöglichkeiten die Werte der Parameter betreffend sind in dem ersten Einstell-Modus nicht vorhanden.

Die Bedienoberfläche weist weiter einen weiteren bzw. zweiten Einstell-Modus auf, bei dem Daten betreffend mindestens einen Regelkreis, dem der mindestens eine Regler zugeordnet ist, eingebbar sind, wobei in dem zweiten Einstell-Modus die Werte der Mehrzahl von Parametern aus den eingegebenen Daten betreffend den mindestens einen Regelkreis berechnet werden.

Der erste Einstell-Modus ist beispielsweise für einen Mechaniker sinnvoll, der lediglich einen Elektromotor bewegen möchte. Der Mechaniker kennt üblicherweise die einstellungsrelevanten Parameter der Regelstrecke nicht. Der Mechaniker kann mittels des Ersatzparameterwerts alle für ihn relevanten Einstellungen vornehmen.

Ein Konstrukteur kennt die Maschine und die relevanten mechanischen Eigenschaften. Für ihn ist es einfach möglich, die Reglerauslegung beispielsweise anhand der Massenträgheiten und Eigenfrequenzen vorzunehmen. Für diesen ist folglich der zweite Einstell-Modus vorgesehen.

Neben dem zweiten Einstell-Modus können noch weitere Einstell-Modi vorgesehen sein, beispielsweise ein dritter Einstell-Modus, bei dem ein Regelungstechnikexperte eine Sprungantwort oder ein Bode-Diagramm nutzen kann, um eine geeignete Reglerauslegung zu ermitteln.

Die Erfindung wird nachfolgend unter Bezugnahme auf die Zeichnungen detailliert beschrieben. Hierbei zeigt:

Fig. 1    ein schematisches Blockschaltbild eines erfindungsgemäßen elektrischen Antriebssystems,

Fig. 2    eine Bedienoberfläche zum Einstellen eines Ersatzparameters eines Reglers des in Fig. 1 gezeigten elektrischen Antriebssystems,

Fig. 3.    einen zeitlichen Verlauf von Signalen im Zuge einer automatischen Einstellung von Werten eines Parameters eines in Fig. 1 gezeigten Drehzahlreglers und

Fig. 4    einen zeitlichen Verlauf von Signalen im Zuge einer automatischen Einstellung von Werten von drei Parametern der in Fig. 1 dargestellten Regler.

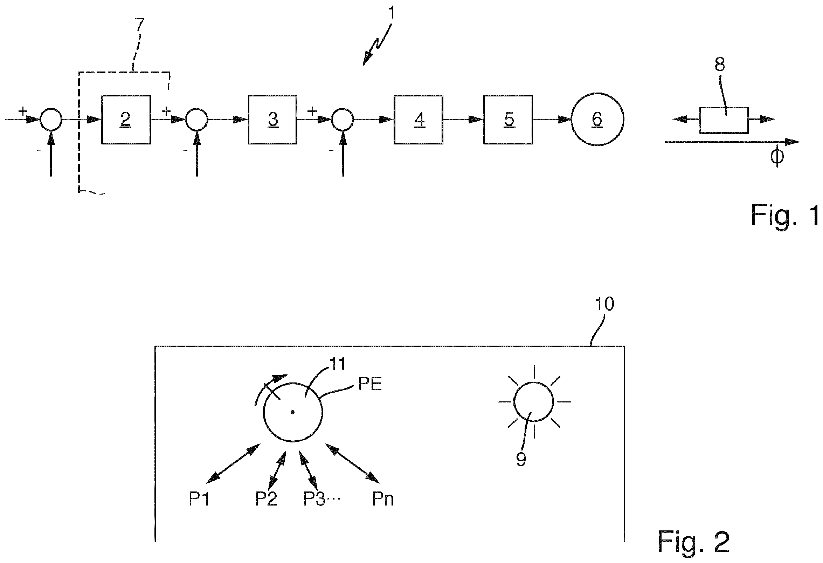

Fig. 1 zeigt hoch schematisch ein elektrisches Antriebssystem 1.

Das elektrische Antriebssystem 1 weist einen Lageregler 2, einen dem Lageregler 2 nachgeschalteten Drehzahlregler 3, einen dem Drehzahlregler 3 nachgeschalteten Stromregler 4 und einem mittels des Stromreglers 4 angesteuerten Inverter 5 auf, wobei der Inverter 5 herkömmlich einen Elektromotor 6 ansteuert. Eine derartige kaskadierte Reglerstruktur ist an sich bekannt, so dass insoweit auch auf die einschlägige Fachliteratur verwiesen sei.

Die Komponenten 2 bis 5 können Bestandteil eines Servoumrichters sein.

Das elektrische Antriebssystem 1 dient zum Bewegen einer mechanischen Komponente 8.

Bezugnehmend auf Fig. 2 ist zum Einstellen von Werten von Parametern P1, P2, ... Pn mindestens eines der Regler 2, 3, 4 eine Bedienoberfläche bzw. Parametriervorrichtung 10 vorgesehen, die beispielsweise als PC mit entsprechender Parametriersoftware ausgebildet sein kann.

Der Lageregler 2 weist einen einzustellenden P-Parameter auf, der in Fig. 2 exemplarisch als P1 bezeichnet ist.

Der Drehzahlregler 3 weist einen einzustellenden P-Parameter, der in Fig. 2 exemplarisch als P2 bezeichnet ist, einen einzustellenden I-Parameter, der in Fig. 2 exemplarisch als P3 bezeichnet ist, und eine einzustellende Filterzeit auf, die in Fig. 2 exemplarisch als Pn bezeichnet ist.

Die Parameter P1 bis Pn sind in Fig. 2 lediglich symbolisch dargestellt und sind in dem dargestellten Betriebs-Modus der Parametriervorrichtung 10 für einen Benutzer nicht sichtbar und nicht unmittelbar einstellbar.

Stattdessen ist ein Ersatzparametereinstellglied 11 sichtbar und bedienbar, mittels dem ein Ersatzparameterwert PE durch den Benutzer einstellbar ist. Ein Einstellvorgang kann beispielsweise ein Drehen des Ersatzparametereinstellglieds 11, ein vertikales oder horizontales Schieben des Ersatzparametereinstellglieds 11, etc. beinhalten.

Nach einem Einstellen und/oder während des Einstellens des Ersatzparameterwerts PE berechnet die Parametriervorrichtung 10 die Werte der Mehrzahl von Parametern P1, P2, ... Pn aus dem eingestellten Ersatzparameterwert PE basierend auf einem vorgegebenen Algorithmus, so dass dem einstellenden Benutzer eine komplexe Einstellprozedur erspart bleibt, bei der er sämtliche Parameter, gegebenenfalls noch in einer spezifischen Reihenfolge, einstellen muss.

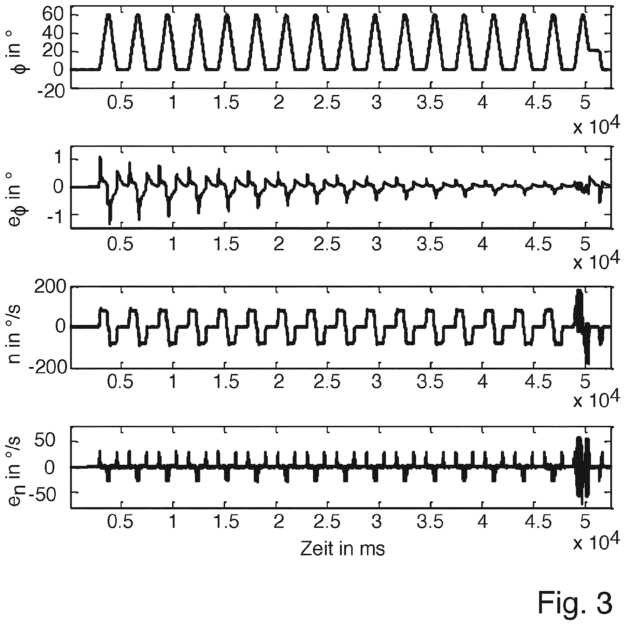

Fig. 3 zeigt einen zeitlichen Verlauf von Signalen im Zuge einer automatischen Einstellung der Werte mindestens eines der Parameter P1 bis Pn der in Fig. 1 gezeigten Regler 2 bis 4. Im Detail ist in Fig. 3 ein Einstell-Optimierungslauf eines Werts eines Parameters in Form eines Verstärkungsfaktors des PID-Drehzahlreglers 3 dargestellt.

Im Diagramm ganz oben ist der Verlauf einer Motorposition ø in ° dargestellt. Jeder "Zacken" stellt eine gewünschte Einzel-Bewegung des Motors 6 dar.

Im Diagramm darunter ist der Fehler $e_{\emptyset}$ in °als Gütekriterium dargestellt. Der Fehler $e_{\emptyset}$ wird kleiner, wenn der Regler bei fortschreitender Zeit mit steigendem Verstärkungsfaktor zunehmend steifer eingestellt wird.

In den Diagrammen darunter sind die Drehzahl n in °/s bzw. der Drehzahlfehler $e_n$ in °/s dargestellt. Im unteren Diagramm ganz rechts ist eine beginnende Schwingung dargestellt, d.h. die Stabilitätsgrenze ist erreicht, was erfindungsgemäß erkannt und zur optimierten Einstellung der Werte der Parameter der Regler verwendet wird.

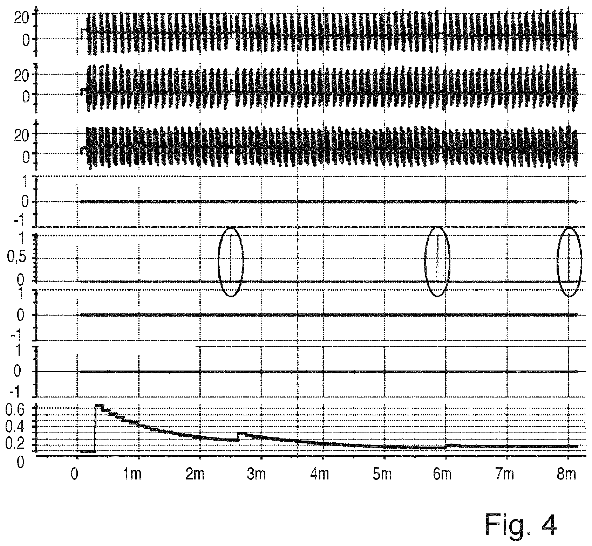

Fig. 4 zeigt entsprechend einen zeitlichen Verlauf von Signalen im Zuge einer automatischen Einstellung von Werten von drei Parametern der in Fig. 1 dargestellten Regler 2, 3, und 4.

Die oberen drei Signale bilden Eingangssignale für die Bestimmung der Stabilitätsgrenze und/oder Regelgüte, dann folgen drei aus den Eingangssignalen abgeleitete Signale, die eine erkannte Stabilitätsgrenze anzeigen, und um unteren Diagramm ist schließlich der Verlauf der Regelgüte dargestellt.

Wie aus Fig. 4 hervorgeht, kann mittels des automatischen Einstellens der Werte der Parameter der Regler, das auf einem automatischen Erkennen der Stabilitätsgrenze basiert, die Regelgüte deutlich verbessert werden, so dass sich beispielsweise ein Schleppfehler erheblich reduzieren lässt.

## Patentansprüche

1. Verfahren zum Einstellen von Werten einer Mehrzahl von Parametern (P1, P2, ... Pn) mindestens eines Reglers (2, 3, 4) eines elektrischen Antriebssystems (1), mit den Schritten:

   - Bereitstellen eines einzelnen, von einem Benutzer einstellbaren Ersatzparameterwerts (PE) und
   - nach einem Einstellen des Ersatzparameterwerts (PE), Berechnen der Werte der Mehrzahl von Parametern (P1, P2, ... Pn) aus dem eingestellten Ersatzparameterwert (PE),
   - wobei das elektrische Antriebssystem (1) einen Lageregler (2) und einen Drehzahlregler (3) aufweist, wobei die Mehrzahl von Parametern (P1, P2, ... Pn) Parameter des Lagereglers (2) und Parameter des Drehzahlreglers (3) sind, und
   - wobei zum Einstellen der Werte der Mehrzahl von Parametern (P1, P2, ... Pn) eine Bedienoberfläche (10) erzeugt wird,

      - wobei die Bedienoberfläche (10) einen ersten Einstell-Modus aufweist, bei dem lediglich der Ersatzparameterwert (PE) einstellbar ist,

   **dadurch gekennzeichnet, dass**

      - die Bedienoberfläche (10) einen zweiten Einstell-Modus aufweist, bei dem Daten betreffend mindestens einen Regelkreis (7), dem der mindestens eine Regler (2, 3, 4) zugeordnet ist, eingebbar sind, wobei in dem zweiten Einstell-Modus die Werte der Mehrzahl von Parametern (P1, P2, ... Pn) aus den eingegebenen Daten betreffend den mindestens einen Regelkreis (7) berechnet werden.

2. Verfahren nach Anspruch 1, **dadurch gekennzeichnet, dass**

- der Lageregler (2) einen einzustellenden P-Parameter aufweist und
- der Drehzahlregler (3) einen einzustellenden P-Parameter, einen einzustellenden I-Parameter und/oder eine einzustellende Filterzeit aufweist.

**3.** Verfahren nach Anspruch 1, **dadurch gekennzeichnet, dass** das elektrische Antriebssystem (1) einen Zustandsregler für mechanische Regelgrößen aufweist, wobei die Mehrzahl von Parametern (P1, P2, ... Pn) Parameter des Zustandsreglers sind.

**4.** Verfahren nach dem Oberbegriff des Anspruchs 1, **dadurch gekennzeichnet, dass**

- basierend auf simulierten und/oder gemessenen Betriebsgrößen des elektrischen Antriebssystems (1) bestimmt wird, ob mindestens ein Regelkreis (7), dem der mindestens eine Regler (2, 3, 4) zugeordnet ist, seine Stabilitätsgrenze erreicht oder überschreitet.

**5.** Verfahren nach Anspruch 4, **dadurch gekennzeichnet, dass**

- die Betriebsgrößen einen zeitlichen Verlauf eines Stroms eines Elektromotors (6) des elektrischen Antriebssystems (1), und/oder einen zeitlichen Verlauf einer Drehzahl des Elektromotors (6) und/oder einen zeitlichen Verlauf einer Lage (0) einer mittels des elektrischen Antriebssystems (1) zu bewegenden Komponente (8) umfassen.

**6.** Verfahren nach Anspruch 4 oder 5, **dadurch gekennzeichnet, dass**

- ein Signal (9) erzeugt wird, das signalisiert, ob der mindestens eine Regelkreis (7) seine Stabilitätsgrenze erreicht oder überschreitet.

**7.** Verfahren nach einem der Ansprüche 4 bis 6, **dadurch gekennzeichnet, dass**

- die Werte der Mehrzahl von Parametern (P1, P2, ... Pn) automatisch so lange verändert werden, bis der mindestens ein Regelkreis (7) seine Stabilitätsgrenze erreicht oder überschreitet, wobei die sich bei Erreichen oder Überschreiten der Stabilitätsgrenze einstellenden Werte der Mehrzahl von Parametern (P1, P2, ... Pn) als Referenzwerte gespeichert werden,
- wobei anschließend die Werte der Mehrzahl von Parametern (P1, P2, ... Pn) basierend auf den Referenzwerten eingestellt werden.

**8.** Elektrisches Antriebssystem (1), aufweisend:

- mindestens einen Regler (2, 3, 4) und
- eine Regler-Parametriereinrichtung (10), die dazu ausgebildet ist, ein Verfahren nach einem der vorhergehenden Ansprüche auszuführen.

**Claims**

**1.** Method for setting values of a plurality of parameters (P1, P2, ... Pn) of at least one controller (2, 3, 4) of an electric drive system (1), comprising the steps of:

- providing an individual replacement parameter value (PE) able to be set by a user, and
- after setting the replacement parameter value (PE), calculating the values of the plurality of parameters (P1, P2, ... Pn) from the set replacement parameter value (PE),
- wherein the electric drive system (1) has a position controller (2) and a rate of rotation controller (3), wherein the plurality of parameters (P1, P2, ... Pn) are parameters of the position controller (2) and parameters of the rate of rotation controller (3), and
- wherein a user interface (10) is generated in order to set the values of the plurality of parameters (P1, P2, ... Pn),
- wherein the user interface (10) has a first setting mode, in which only the replacement parameter value (PE) is able to be set,

**characterized in that**

- the user interface (10) has a second setting mode, in which data relating to at least one control circuit (7) to which the at least one controller (2, 3, 4) is assigned are able to be input, wherein the values of the plurality of parameters (P1, P2, ... Pn) are calculated from the input data relating to the at least one control circuit (7) in the second setting mode.

**2.** Method according to Claim 1, **characterized in that**

- the position controller (2) has a P parameter to be set and
- the rate of rotation controller (3) has a P parameter to be set, an I parameter to be set and/or a filter time to be set.

**3.** Method according to Claim 1, **characterized in that** the electric drive system (1) has a state controller for mechanical control variables, wherein the plurality of parameters (P1, P2, ... Pn) are parameters of the state controller.

**4.** Method according to the preamble of Claim 1, **characterized in that**

- it is determined, on the basis of simulated and/or measured operating variables of the electric drive system (1), whether at least one control circuit (7) to which the at least one controller (2, 3, 4) is assigned reaches or exceeds its stability limit.

5. Method according to Claim 4, **characterized in that**

- the operating variables comprise a temporal profile of a current of an electric motor (6) of the electric drive system (1) and/or a temporal profile of a rate of rotation of the electric motor (6) and/or a temporal profile of a position (Ø) of a component (8) to be moved by way of the electric drive system (1).

6. Method according to Claim 4 or 5, **characterized in that**

- a signal (9) that signals whether the at least one control circuit (7) reaches or exceeds its stability limit is generated.

7. Method according to one of Claims 4 to 6, **characterized in that**

- the values of the plurality of parameters (P1, P2, ... Pn) are changed automatically until the at least one control circuit (7) reaches or exceeds its stability limit, wherein the values of the plurality of parameters (P1, P2, ... Pn) that set in when the stability limit is reached or exceeded are stored as reference values,
- wherein the values of the plurality of parameters (P1, P2, ... Pn) are then set based on the reference values.

8. Electric drive system (1), having:

- at least one controller (2, 3, 4) and
- a controller parameterization device (10) that is designed to execute a method according to one of the preceding claims.

**Revendications**

1. Procédé de réglage de valeurs d'une pluralité de paramètres (P1, P2, ... Pn) d'au moins un régulateur (2, 3, 4) d'un système d'entraînement électrique (1), comprenant les étapes suivantes :

- fourniture d'une valeur de paramètre de substitution (PE) unique, réglable par un utilisateur ; et
- après un réglage de la valeur de paramètre de substitution (PE), calcul des valeurs de la pluralité de paramètres (P1, P2, ... Pn) à partir de la valeur de paramètre de substitution (PE) réglée,
- le système d'entraînement électrique (1) possédant un régulateur de position (2) et un régulateur de vitesse de rotation (3), la pluralité de paramètres (P1, P2, ... Pn) étant des paramètres du régulateur de position (2) et des paramètres du régulateur de vitesse de rotation (3), et
- une interface utilisateur (10) étant générée pour régler les valeurs de la pluralité de paramètres (P1, P2, ... Pn),
- l'interface utilisateur (10) possédant un premier mode de réglage avec lequel seule la valeur de paramètre de substitution (PE) peut être réglée,

**caractérisé en ce que**

- l'interface utilisateur (10) possédant un deuxième mode de réglage, avec lequel des données concernant au moins un circuit de régulation (7), auquel est associé l'au moins un régulateur (2, 3, 4), peuvent être saisies, les valeurs de la pluralité de paramètres (P1, P2, ... Pn) étant calculées dans le deuxième mode de réglage à partir des données saisies concernant l'au moins un circuit de régulation (7).

2. Procédé selon la revendication 1, **caractérisé en ce que**

- le régulateur de position (2) possède un paramètre P à régler et
- le régulateur de vitesse de rotation (3) possède un paramètre P à régler, un paramètre I à régler et/ou un temps de filtrage à régler.

3. Procédé selon la revendication 1, **caractérisé en ce que** le système d'entraînement électrique (1) possède un régulateur d'état pour des grandeurs de régulation mécaniques, la pluralité de paramètres (P1, P2, ... Pn) étant des paramètres du régulateur d'état.

4. Procédé selon le préambule de la revendication 1, **caractérisé en ce que**

- sur la base de grandeurs de fonctionnement simulées et/ou mesurées du système d'entraînement électrique (1), il est déterminé si au moins un circuit de régulation (7), auquel est associé l'au moins un régulateur (2, 3, 4), atteint ou dépasse sa limite de stabilité.

5. Procédé selon la revendication 4, **caractérisé en ce que**

- les grandeurs de fonctionnement comprennent une évolution dans le temps d'un courant d'un moteur électrique (6) du système d'entraînement électrique (1), et/ou une évolution dans le temps d'une vitesse de rotation du moteur électrique (6) et/ou une évolution dans le temps d'une position (Ø) d'un composant (8) à déplacer au moyen du système d'entraînement électrique (1).

6. Procédé selon la revendication 4 ou 5, **caractérisé en ce que**

   - un signal (9) est généré, qui signale si l'au moins un circuit de régulation (7) atteint ou dépasse sa limite de stabilité.

7. Procédé selon l'une des revendications 4 à 6, **caractérisé en ce que**

   - les valeurs de la pluralité de paramètres (P1, P2, ... Pn) sont modifiées automatiquement jusqu'à ce que l'au moins un circuit de régulation (7) atteigne ou dépasse sa limite de stabilité, les valeurs de la pluralité de paramètres (P1, P2, ... Pn) qui s'établissent lorsque la limite de stabilité est atteinte ou dépassée étant mémorisées en tant que valeurs de référence,
   - les valeurs de la pluralité de paramètres (P1, P2, ... Pn) étant ensuite réglées sur la base des valeurs de référence.

8. Système d'entraînement électrique (1), possédant :

   - au moins un régulateur (2, 3, 4) et
   - un dispositif de paramétrage de régulateur (10), qui est configuré pour mettre en œuvre un procédé selon l'une des revendications précédentes.

Fig. 1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2007122904 A1
- US 2003040817 A1
- US 5475291 A
- DE 102010056295 A1

### In der Beschreibung aufgeführte Nicht-Patentliteratur

- *Tuning / Parameter Setting Auto Tuning Why Auto Tuning?,* 01. Juli 2016, 1-16
- **RICHARD W ARMSTRONG et al.** *Load to Motor Inertia Mismatch: Unveiling The Truth,* 01. Januar 1998